(19) Europäisches Patentamt / European Patent Office / Office européen des brevets

(11) EP 3 694 946 B1

(12) # EUROPÄISCHE PATENTSCHRIFT

(45) Veröffentlichungstag und Bekanntmachung des Hinweises auf die Patenterteilung:
**10.11.2021 Patentblatt 2021/45**

(21) Anmeldenummer: **18773483.5**

(22) Anmeldetag: **28.09.2018**

(51) Int Cl.:
***C09J 133/08*** *(2006.01)* ***C09J 7/35*** *(2018.01)*
***C09J 7/38*** *(2018.01)* ***C08L 67/02*** *(2006.01)*

(86) Internationale Anmeldenummer:
**PCT/EP2018/076458**

(87) Internationale Veröffentlichungsnummer:
**WO 2019/072594 (18.04.2019 Gazette 2019/16)**

(54) **GEGEN WEICHMACHERMIGRATION RESISTENTER, UV-HÄRTBARER SCHMELZKLEBSTOFF FÜR GRAPHIKFOLIEN UND ETIKETTEN AUS WEICH-PVC**

UV-CURABLE HOT MELT ADHESIVE RESISTANT TO PLASTICIZER MIGRATION FOR GRAPHIC FILMS AND LABELS MADE OF SOFT PVC

ADHÉSIF THERMOFUSIBLE DURCISSABLE AUX UV RÉSISTANT À LA MIGRATION DES PLASTIFIANTS POUR FILMS GRAPHIQUES ET ÉTIQUETTES EN PVC SOUPLE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **11.10.2017 EP 17195828**

(43) Veröffentlichungstag der Anmeldung:
**19.08.2020 Patentblatt 2020/34**

(73) Patentinhaber: **BASF SE**
**67056 Ludwigshafen am Rhein (DE)**

(72) Erfinder:
- **WULFF, Dirk**
  **67056 Ludwigshafen (DE)**
- **LICHT, Ulrike**
  **67056 Ludwigshafen (DE)**
- **CHRIST, Thomas**
  **67056 Ludwigshafen (DE)**
- **GERST, Matthias**
  **67056 Ludwigshafen (DE)**

(74) Vertreter: **BASF IP Association**
**BASF SE**
**GBI-C006**
**67056 Ludwigshafen (DE)**

(56) Entgegenhaltungen:
**DE-A1- 10 010 767** **US-A- 6 054 213**
**US-A1- 2016 369 133**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 694 946 B1

## Beschreibung

Die Erfindung betrifft einen gegen Weichmachermigration resistenten UV-härtbaren Schmelzklebstoff, enthaltend ein bestimmtes UV-vernetzbares Poly(meth)acrylat und ein bestimmtes aliphatisches Polyesterpolymer. Beschrieben wird auch die Verwendung des Schmelzklebstoffs auf Graphikfolien aus Weich-PVC und auf selbstklebenden Etiketten aus Weich-PVC. Herkömmliche UV-härtbare Schmelzklebstoffe auf Basis von UV-vernetzbaren Poly(meth)-acrylaten sind häufig nicht ausreichend resistent gegenüber der Migration von Weichmachern, beispielsweise wenn sie als Klebstoff für weichmacherhaltige Substrate angewendet werden. Dabei kann es zu einer Migration von Weichmachern aus dem Substrat in die Klebstoffschicht kommen, wodurch die Klebkraft deutlich verringert wird. Es besteht deshalb ein Bedarf an UV-härtbaren Schmelzklebstoffen, die resistent sind gegen Weichmachermigration.

In der WO 02/086002 werden weichmacherresistente Klebstoffsysteme beschrieben auf Basis von Copolymeren aus aromatischen (Meth)acrylatmonomeren, stickstoffhaltigen Vinylmonomeren und Alkyl(meth)acrylaten. UV-vernetzbare Schmelzklebstoffe auf der Basis von (Meth)-acrylatpolymeren mit vergleichsweise hohem Gehalt an Methylmethacrylat (> 20 Gew.%) sind beispielsweise bekannt aus WO 97/31 077, WO 97/31076, WO 2007/079080 und US 5800919.

US 2016/369133 A1 offenbart eine Graphikfolie aus schwarzen Weich-PVC mit 30 Gew.-%, bezogen auf die PVC-Folie, eines polymeren Weichmachers. Es bestand daher die Aufgabe, Schmelzklebstoffe auf Basis von UV-vernetzbaren Poly(meth)-acrylaten zur Verfügung zu stellen, die eine möglichst geringe zeitliche Abnahme der Klebkräfte zeigen, wenn sie auf weichmacherhaltigen Substraten, wie z.B. Graphikfolien und selbstklebenden Etiketten aus Weich-PVC, angewendet werden.

Die Aufgabe wird erfindungsgemäß gelöst durch einen UV-härtbaren Schmelzklebstoff, enthaltend

(a) mindestens ein UV-vernetzbares Poly(meth)acrylat, welches gebildet ist aus

- (i) mindestens 20 Gew.% Methylacrylat,
- (ii) mindestens einem Alkyl(meth)acrylat mit 4 bis 18 C-Atomen in der Alkylgruppe,
- (iii) mindestens einem ethylenisch ungesättigten Monomer, welches mindestens eine Säuregruppe aufweist,
- (iv) mindestens einem ethylenisch ungesättigten, copolymerisierbaren Fotoinitiatormonomer, und
- (v) optional mindestens einem weiteren, von den Monomeren (i) bis (iv) verschiedenen Monomer, und

(b) mindestens ein aliphatisches Polyesterpolymer, welches bei 20°C eine dynamische Viskosität von 500 bis 20 000 mPa s aufweist.

Im Folgenden werden gelegentlich die Bezeichnung "(Meth)acryl..." und ähnliche Bezeichnungen als abkürzende Schreibweise verwendet für "Acryl... oder Methacryl...". In der Bezeichnung Cx-Alkyl(meth)acrylat und analogen Bezeichnungen bedeutet x die Anzahl der C-Atome der Alkylgruppe.

Ein Poly(meth)acrylat ist ein Polymer, welches überwiegend, d.h. zu mehr als 50 Gew.% aus (Meth)acrylsäure und deren Säurederivaten, insbesondere deren Salzen, Estern oder Amiden hergestellt ist.

Mengenangaben zu Monomeren eines Polymers beziehen sich, soweit nicht explizit etwas anderes angegeben ist, auf 100 Gewichtsteile der Summe aller Monomere.

Ein Haftklebstoff ist ein viskoelastischer Klebstoff, dessen abgebundener Film bei Raumtemperatur (20°C) in trockenem Zustand permanent klebrig und klebfähig bleibt. Die Klebung auf Substraten erfolgt sofort durch leichten Anpressdruck.

Der Begriff UV-härtbar bezeichnet einen Stoff oder eine Zusammensetzung, die bei Bestrahlung mit UV-Licht härtet. Der Begriff UV-vernetzbar bedeutet, dass der Schmelzklebstoff mindestens eine Verbindung mit mindestens einer strahlungsempfindlichen Gruppe enthält und bei Bestrahlung eine Vernetzungsreaktion induziert wird. Die Bestrahlung zur Vernetzung erfolgt mit UV-Licht, insbesondere UV-C Strahlung.

Schmelzklebstoffe, die auch als Heißklebstoffe, Heißkleber, Heißleim oder Hotmelt bekannt sind, sind lösungsmittelfreie Produkte, d.h. sie sind nicht in Wasser oder organischen Lösungsmitteln gelöst oder dispergiert. Es sind bei Raumtemperatur mehr oder weniger feste Produkte, die im heißen Zustand hinreichend fluide sind und aufgrund der damit verbundenen Viskositätserniedrigung auf eine Klebefläche aufgetragen werden können, und beim Abkühlen die Klebeverbindung herstellen, wobei UV-vernetzbare Schmelzklebstoffe dabei noch bestrahlt werden.

Bei strahlungsvernetzbaren Haftklebstoffen wird die Kohäsion, d. h. die innere Festigkeit der Klebstoffschicht, nach Beschichten des Klebstoffs auf einen Träger durch anschließende fotochemisch induzierte Vernetzung erreicht.

Das strahlungsvernetzbare Poly(meth)acrylat ist zu mindestens 20 Gew.%, d.h. zu 20 oder mehr Gew.%, vorzugsweise 25 oder mehr, 30 oder mehr oder 35 oder mehr Gew.% und vorzugsweise zu bis zu 60 Gew.%, z.B. von 20 bis 60 Gew.% oder von 25 bis 55 Gew.% oder von 30 bis 50 Gew.% aus Methylacrylat (i) aufgebaut.

Das strahlungsvernetzbare Poly(meth)acrylat ist aus mindestens einem Alkyl(meth)acrylat mit 4 bis 18 C-Atomen in der Alkylgruppe (ii) aufgebaut, vorzugsweise zu mindestens 30 oder mindestens 35 Gew.% z.B. von 35 bis 60 Gew.%. Bevorzugt sind C4- bis C10-Alkyl(meth)acrylate, insbesondere C4- bis C8-Alkyl(meth)acrylate, z.B. n-Butyl(meth)acrylat, Isobutyl(meth)acrylat, 2-Methylbutyl(meth)acrylat, n-Octyl(meth)acrylat, Isooctyl(meth)acrylat, Isononyl(meth)acrylat, Isodecyl(meth)acrylat, n-Hexylacrylat, 2-Propylhexylacrylat und 2-Ethylhexylacrylat und deren Mischungen. Besonders bevorzugt sind n-Butylacrylat und 2-Ethylhexylacrylat. Das strahlungsvernetzbare Poly(meth)acrylat ist vorzugsweise zu mindestens 30 Gew.% aus C4- bis C10-Alkyl(meth)acrylaten, vorzugsweise ausgewählt aus n-Butylacrylat und 2-Ethylhexylacrylat, gebildet.

Das strahlungsvernetzbare Poly(meth)acrylat ist aufgebaut aus mindestens einem ethylenisch ungesättigten Monomer, welches mindestens eine Säuregruppe (Säuremonomer (iii)) aufweist. Das Poly(meth)acrylatpolymer ist vorzugsweise zu 0,1 bis 30 Gew.%, besonders bevorzugt zu 0,5 bis 25 Gew.% oder zu 1 bis 15 Gew.% oder zu 1 bis 10 Gew.% aus den Monomeren mit Säuregruppen gebildet. Als Säuremonomere (iii) in Betracht kommen insbesondere Monomere mit Carbonsäure-, Sulfonsäure- oder Phosphonsäuregruppen. Bevorzugt sind Carbonsäuregruppen. Genannt seien z.B. Acrylsäure, Methacrylsäure, Itaconsäure, Maleinsäure oder Fumarsäure. Bevorzugte Monomere mit Carbonsäuregruppen sind Acrylsäure, Methacrylsäure oder deren Gemisch.

Das Poly(meth)acrylat ist strahlungsvernetzbar durch Bestrahlung mit UV-Licht. Das strahlungsvernetzbare Poly(meth)acrylat ist aufgebaut aus mindestens einem ethylenisch ungesättigten, copolymerisierbaren Fotoinitiatormonomer (iv). Ein Fotoinitiatormonomer ist eine ethylenisch ungesättigte, copolymerisierbare Verbindung mit mindestens einer Fotoinitiatorgruppe. Der Schmelzklebstoff enthält vorzugsweise 0,0001 bis 0,5 mol, besonders bevorzugt 0,0002 bis 0,1 mol, ganz besonders bevorzugt 0,003 bis 0,01 mol der als Fotoinitiator wirksamen, an das Polymer gebundenen Molekülgruppe pro 100 g Poly(meth)acrylat. Das Poly(meth)acrylat ist vorzugsweise zu größer oder gleich 0,1 Gew.%, vorzugsweise größer oder gleich 0,2 Gew.%, z.B. von 0,1 bis 10 Gew.%, von 0,2 bis 5 Gew.% oder von 0,5 bis zu 1,5 Gew.% aus mindestens einer ethylenisch ungesättigten, copolymerisierbaren Verbindung mit einer Fotoinitiatorgruppe gebildet.

Beim Fotoinitiator kann es sich z.B. um sogenannte $\alpha$-Spalter handeln, das sind Fotoinitiatoren, bei denen eine chemische Bindung gespalten wird, so dass 2 Radikale entstehen, die die weiteren Vernetzungs- oder Polymerisationsreaktionen initiieren. Genannt seien z. B. Acylphosphinoxide, Hydroxyalkylphenone, Benzoinderivate, Benzilderivate, Dialkyloxyacetophenone. Insbesondere kann es sich um sogenannte H-Abstraktoren handeln, welche ein Wasserstoffatom von der Polymerkette ablösen, z. B. handelt es sich hierbei um Fotoinitiatoren mit einer Carbonylgruppe. Diese Carbonylgruppe schiebt sich in eine C-H Bindung unter Ausbildung einer C-C-O-H Gruppierung. Genannt seien hier insbesondere Acetophenon, Benzophenon und deren Derivate. Es können beide Klassen von Fotoinitiatoren allein oder auch im Gemisch verwendet werden. Das Fotoinitiatormonomer ist z.B. durch radikalische Copolymerisation in die Polymerkette eingebaut. Vorzugsweise enthält das Fotoinitiatormonomer dazu eine Acryl- oder (Meth)acrylgruppe.

Durch Bestrahlung mit energiereichem Licht, insbesondere UV- Licht, bewirkt der Fotoinitiator bzw. die Fotoinitiatorgruppe eine Vernetzung des Polymeren, vorzugsweise durch eine chemische Pfropfreaktion der Fotoinitiatorgruppe mit einer räumlich benachbarten Polymer- oder Oligomerkette. Insbesondere kann die Vernetzung durch Einschub einer Carbonylgruppe des Fotoinitiators in eine benachbarte C-H-Bindung unter Ausbildung einer -C-C-O-H Gruppierung erfolgen. Der Wellenlängenbereich, in dem die Fotoinitiatorgruppe aktiviert werden kann, d.h. in dem die Hauptabsorptionsbande der Fotoinitiatorgruppe liegt, ist vorzugsweise 200 bis 450 nm, besonders bevorzugt 250 bis 350 nm, ganz besonders bevorzugt 250 bis 280 nm.

Das UV-vernetzbare Poly(meth)acrylat kann hergestellt werden durch radikalische Polymerisation von ethylenisch ungesättigten Monomeren unter Copolymerisation von mindestens einer strahlungsempfindlichen, radikalisch polymerisierbaren organischen Verbindung. Strahlungsempfindliche, radikalisch polymerisierbare organische Verbindungen werden im Folgenden kurz als polymerisierbarer Fotoinitiator bezeichnet. Der polymerisierbare Fotoinitiator kann durch radikalische Copolymerisation in die Polymerkette von Copolymeren eingebaut werden. Polymerisierbare Fotoinitiatoren haben vorzugsweise folgenden prinzipiellen Aufbau:

A-X-B

wobei A ein einwertiger organischer Rest ist, welcher als strahlungsempfindliche Gruppe vorzugsweise eine Phenongruppe aufweist,

X eine Estergruppe ist, ausgewählt aus -O-C(=O)-, -(C=O)-O- und -O-(C=O)-O-, und B ein einwertiger organischer Rest ist, welcher eine ethylenisch ungesättigte, radikalisch polymerisierbare Gruppe enthält. Bevorzugte Reste A sind Reste, welche mindestens ein Strukturelement enthalten, welches abgeleitet ist von Phenonen, insbesondere von Acetophenonen oder Benzophenonen. Bevorzugte Reste B enthalten mindestens eine, vorzugsweise genau eine Acryl- oder Methacrylgruppe.

Die ethylenisch ungesättigte Gruppe kann direkt an die Gruppe X gebunden sein. Ebenso kann die strahlungsempfindliche Gruppe direkt an die Gruppe X gebunden sein. Es können sich aber auch zwischen ethylenisch ungesättigter Gruppe und der Gruppe X bzw. zwischen strahlungsempfindlicher Gruppe und Gruppe X jeweils eine Spacergruppe (Abstandshalter) befinden. Die Spacergruppe kann z.B. ein Molekulargewicht von bis zu 500, insbesondere bis zu 300 oder 200 g/Mol aufweisen.

Geeignete copolymerisierbare Fotoinitiatoren sind Acetophenon- oder Benzophenonderivate, welche mindestens eine, vorzugsweise eine, ethylenisch ungesättigte Gruppe enthalten, beispielsweise beschrieben in EP 377191 A oder EP 1213306 A. Bei der ethylenisch ungesättigten Gruppe handelt es sich vorzugsweise um eine Acryl- oder Methacrylgruppe. Die ethylenisch ungesättigte Gruppe kann direkt an den Phenylring des Acetophenon- oder Benzophenonderivats gebunden sein. Im Allgemeinen befindet sich zwischen Phenylring und ethylenisch ungesättigter Gruppe eine Spacergruppe (Abstandshalter). Die Spacergruppe kann z. B. bis 100 C-Atome enthalten.

Eine bevorzugte Gruppe X ist die Carbonatgruppe -O-(C=O)-O-. Bevorzugte polymerisierbare Fotoinitiatoren sind Verbindungen der Formel F-1:

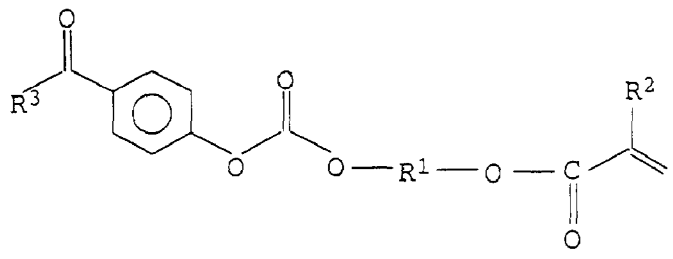

F-1

worin R1 für einen organischen Rest mit bis zu 30 C-Atomen, R2 für ein H-Atom oder eine Methylgruppe und R3 für eine substituierte oder unsubstituierte Phenylgruppe oder für eine C1-C4-Alkylgruppe steht. R1 steht besonders bevorzugt für eine Alkylengruppe, insbesondere für eine C2-C8-Alkylengruppe. R3 steht besonders bevorzugt für eine Methylgruppe oder für eine Phenylgruppe, ganz besonders bevorzugt für eine Phenylgruppe.

Weitere, als copolymerisierbare Fotoinitiatoren geeignete Acetophenon- und Benzophenonderivate sind z.B. solche der Formel F-2

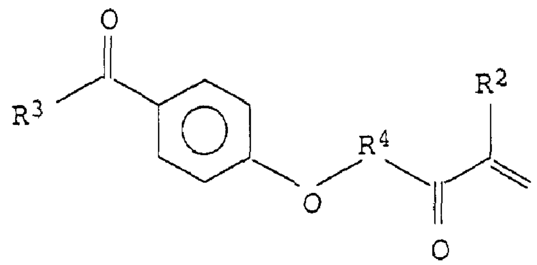

F-2

worin R2 und R3 die obige Bedeutung haben kann und R4 für eine Einfachbindung oder für (-CH2-CH2-O)n stehen kann, wobei n für eine ganze Zahl von 1 bis 12 steht.

Das UV-vernetzbare Poly(meth)acrylat kann optional aus mindestens einem weiteren, von den Monomeren (i) bis (iv) verschiedenen Monomer (v) aufgebaut sein. Die Einsatzmenge der weiteren Monomere (v) beträgt vorzugsweise 0 bis 25 Gew.%, z.B. von 0,1 bis 20 Gew.%, von 0,5 bis 15 Gew.% oder von 1 bis 10 Gew.%. Die weiteren Monomere sind ethylenisch ungesättigte, copolymerisierbare Verbindungen, z.B. Methylmethacrylat, Ethylacrylat, Ethylmethacrylat, Propyl(meth)acrylat, Vinylester von bis zu 20 C-Atome enthaltenden Carbonsäuren, Vinylaromaten mit bis zu 20 C-Atome, ethylenisch ungesättigten Nitrile, Vinylhalogenide, Vinylether von 1 bis 10 C-Atome enthaltenden Alkoholen, aliphatischen Kohlenwasserstoffe mit 2 bis 8 C-Atomen und 1 oder 2 Doppelbindungen oder Mischungen dieser Monomeren. Vinylester von Carbonsäuren mit 1 bis 20 C-Atomen sind z. B. Vinyllaurat, Vinylstearat, Vinylpropionat, Versaticsäurevinylester und Vinylacetat. Als vinylaromatische Verbindungen kommen z.B. Vinyltoluol, $\alpha$- und p-Methylstyrol, alpha-Butylstyrol, 4-n-Butylstyrol, 4-n-Decyl-styrol und vorzugsweise Styrol in Betracht. Beispiele für Nitrile sind Acrylnitril und Methacrylnitril. Die Vinylhalogenide sind mit Chlor, Fluor oder Brom substituierte ethylenisch ungesättigte Verbindungen, bevorzugt Vinylchlorid und Vinylidenchlorid. Als Vinylether zu nennen sind z.B. Vinylmethylether oder Vinylisobutylether. Bevorzugt sind Vinylether von 1 bis 4 C-Atome enthaltenden Alkoholen. Als Kohlenwasserstoffe mit 2 bis 8 C-Atomen und zwei olefinischen Doppelbindungen seien Butadien, Isopren und Chloropren genannt.

Bei den weiteren Monomeren (v) kann es sich auch um Monomere mit polaren Gruppen (polare Monomere) handeln. Diese haben vorzugsweise eine Wasserlöslichkeit bei 21 °C größer 5 g/Liter oder größer 10 g/Liter. Polare Monomere sind z. B. (Meth)acrylamid und Hydroxylgruppen enthaltende Monomere, insbesondere C1-C10-Hydroxyalkyl-(meth)acrylate. Bevorzugte Monomere mit Hydroxygruppen sind C1-C10-Hydroxyalkyl(meth)acrylate, insbesondere Hydroxyethyl(meth) acrylat und Hydroxypropyl(meth) acrylat.

Vorzugsweise umfassen die weiteren Monomere (v) aber keine oder im Wesentlichen keine N-haltigen Monomere. Vorzugsweise umfassen die weiteren Monomere (v) keine oder im Wesentlichen keine aromatischen Monomere. Der Begriff "im Wesentlichen keine" bedeutet dabei Einsatzmengen kleiner als 1 Gew.%, vorzugsweise kleiner oder gleich 0,5 Gew.%.

Ein erfindungsgemäß bevorzugtes strahlungsvernetzbares Poly(meth)acrylat ist gebildet aus

(i) 25 bis 60 Gew.% Methylacrylat,
(ii) 35 bis 60 Gew.% mindestens einem Alkyl(meth)acrylat mit 4 bis 18 C-Atomen in der Alkylgruppe, ausgewählt ist aus der Gruppe bestehend aus n-Butylacrylat, n-Hexylacrylat, 2-Ethyl-hexylacrylat, Propylheptylacrylat und deren Mischungen,
(iii) 1 bis 10 Gew.% Acrylsäure, Methacrylsäure oder deren Gemisch,
(iv) 0,2 bis 5 Gew.% mindestens einem ethylenisch ungesättigten, copolymerisierbaren Fotoinitiatormonomer, und
(v) 0 bis 25 Gew.% mindestens einem weiteren, von den Monomeren (i) bis (iv) verschiedenen Monomer.

Das UV-vernetzbare Poly(meth)acrylat weist vor Vernetzung eine Glasübergangstemperatur von vorzugsweise kleiner oder gleich 10 °C, z.B. von -60 bis +10 °C, insbesondere im Bereich von -60 bis 0°C, oder von -55°C bis -10 °C, besonders bevorzugt von -55 °C bis -15 °C auf. Die Glasübergangstemperatur wird durch Differential Scanning Calorimetrie (ASTM D 3418-08, sogenannte "midpoint temperature") bestimmt. Die Glasübergangstemperatur des Polymers ist die bei Auswertung der zweiten Heizkurve (Heizrate 20° C/min) erhaltene Glasübergangstemperatur.

Durch die sogenannte Foxgleichung ist es dem Fachmann möglich, Copolymere im geeigneten Tg-Bereich vorab zu identifizieren und diese durch geeignete Variation von Art und Menge der Monomeren gezielt herzustellen. Nach Fox (T.G. Fox, Bull. Am. Phys. Soc. 1956 [Ser. II] 1, Seite 123 und gemäß Ullmann's Encyclopädie der technischen Chemie, Bd. 19, Seite 18, 4. Auflage, Verlag Chemie, Weinheim, 1980) gilt für die Glasübergangstemperatur von höchstens schwach vernetzten Mischpolymerisaten in guter Näherung:

$$1/T_g = x^1/T_g^1 + x^2/T_g^2 + .... x^n/T_g^n,$$

wobei $x^1$, $x^2$, .... $x^n$ die Massenbrüche der Monomeren 1, 2, .... n und $T_g^1$, $T_g^2$, .... $T_g^n$ die Glasübergangstemperaturen der jeweils nur aus einem der Monomeren 1, 2, .... n aufgebauten Polymerisaten in Grad Kelvin bedeuten. Die $T_g$-Werte für die Homopolymerisate der meisten Monomeren sind bekannt und z.B. in Ullmann's Ecyclopedia of Industrial Chemistry, Bd. 5, Vol. A21, Seite 169, VCH Weinheim, 1992, aufgeführt; weitere Quellen für Glasübergangstemperaturen von Homopolymerisaten bilden z.B. J. Brandrup, E.H. Immergut, Polymer Handbook, 1st Ed., J. Wiley, New York 1966, 2nd Ed. J. Wiley, New York 1975, und 3rd Ed. J. Wiley, New York 1989).

Das UV-vernetzbare Poly(meth)acrylat des Schmelzklebstoffs hat vor Vernetzung vorzugsweise einen K-Wert von größer oder gleich 20, z.B. von 30 bis 80, besonders bevorzugt von 40 bis 60, gemessen in Tetrahydrofuran (1%ige Lösung, 21 °C). Der K-Wert nach Fikentscher ist ein Maß für das Molekulargewicht und die Viskosität des Polymerisats. Dabei erfolgt die Viskositätsmessung mittels eines Kapillarviskosimeters. Durchführungsvorschriften finden sich in DIN EN ISO 1628-1:2012-10.

Die Poly(meth)acrylate können durch Copolymerisation der monomeren Komponenten unter Verwendung der üblichen Polymerisationsinitiatoren sowie optional von Reglern hergestellt werden, wobei man bei den üblichen Temperaturen in Substanz, in Emulsion, z.B. in Wasser oder flüssigen Kohlenwasserstoffen, oder in Lösung polymerisiert. Vorzugsweise werden die Poly(meth)acrylate durch Polymerisation der Monomeren in organischen Lösungsmitteln, insbesondere in organischen Lösungsmitteln eines Siedebereichs von 50 bis 150 °C, vorzugsweise von 60 bis 120 °C unter Verwendung der üblichen Mengen an Polymerisationsinitiatoren, die im allgemeinen bei 0,01 bis 10, insbesondere bei 0,1 bis 4 Gew.-%, bezogen auf das Gesamtgewicht der Monomeren liegt, hergestellt. Die Polymerisate können bei Temperaturen von 20 bis 150 °C, vorzugsweise bei Temperaturen im Bereich von 70 bis 120 °C und Drucken von 0,1 bis 100 bar (absolut), bevorzugt bei 0,3 bis 10 bar, in Gegenwart von 0,01 bis 10 Gew.-% an Peroxiden oder Azostartern als Polymerisationsinitiatoren, bezogen auf die Monomeren und in Gegenwart von 0 bis 200 Gew.-% an indifferenten Lösungsmitteln, bevorzugt 5 bis 25 Gew.-%, bezogen auf die Monomeren, d.h. durch Lösungs- oder Substanzpolymerisation hergestellt werden. Vorzugsweise erfolgt die Reaktion unter zunehmendem Vakuum, z.B. durch Absenkung des Drucks von Normaldruck (1 bar) auf 500 mbar (absolut). Lösungsmittel sind beispielsweise Kohlenwasserstoffe, Alkohole wie Methanol, Ethanol, Propanol, Butanol, Isobutanol, Ketone wie Aceton, Methylethylketon, Methylisobutylketon, Essigsäureethylester, Nitrile wie Acetonitril und Benzonitril oder Gemische aus den genannten Lösemitteln. In einer bevorzugten Ausführungsform werden als Lösungsmittel für die Polymerisation ein oder mehrere Ketone mit einem Siedepunkt von unter 150°C bei Normaldruck (1 bar).

Als Polymerisationsinitiatoren kommen beispielsweise Azoverbindungen, Ketonperoxide und Alkylperoxide in Betracht, z.B. Acylperoxide wie Benzoylperoxid, Dilauroylperoxid, Didecanoylperoxid, Isononanoylperoxid, Alkylester

wie tert.-Butyl-perpivalat, tert.-Butyl-per-2-ethylhexanoat, tert.-Butyl-per-maleinat, tert.-Butyl-per-isononanoat, tert.-Butyl-per-benzoat, tert.-Amylper-2-ethylhexanoat, Dialkylperoxide wie Dicumylperoxid, tert.-Butylcumylperoxid, Di-tert.-Butylperoxid und Peroxodicarbonate. Des Weiteren können als Initiatoren Azostarter wie beispielsweise 2,2'-Azobisisobutyronitril, 2,2'-Azobis(methylisobutyrat) oder 2,2'-Azobis(2,4-dimethylvaleronitril) Verwendung finden.

Für die Durchführung der Polymerisation können dem Reaktionsgemisch auch den Polymerisationsgrad senkende Verbindungen, sogenannte Polymerisationsregler zugesetzt werden, z.B. in Mengen von 0,1 bis 0,8 Gew.-Teile, bezogen auf 100 Gew.-Teile der zu polymerisierenden Monomeren. Geeignet sind z.B. Verbindungen mit einer Thiolgruppe beispielsweise Mercaptane wie Mercaptoethanol, tert.-Butylmercaptan, Mercaptobernsteinsäure, Thioglycolsäureethylhexylester, 3-Mercaptopropyltrimethoxysilan oder Dodecylmercaptan.

Nach der Polymerisation in Lösung können die Lösungsmittel gegebenenfalls unter vermindertem Druck abgetrennt werden, wobei man bei erhöhten Temperaturen, beispielsweise im Bereich von 100 bis 150 °C arbeitet. Die Polymerisate können dann in lösungsmittelfreiem Zustand (Lösungsmittelgehalt vorzugsweise kleiner 2 Gew.-%, bezogen auf die Gesamtzusammensetzung), d. h. als Schmelzen, eingesetzt werden.

Der erfindungsgemäße Schmelzklebstoff enthält mindestens ein aliphatisches Polyesterpolymer. Die Einsatzmenge beträgt vorzugsweise 1 bis 20 Gew.%, besonders bevorzugt 2 bis 15 Gew.%.

Das Polyesterpolymer ist eine bei Raumtemperatur (20°C) flüssige Verbindung mit einer dynamische Viskosität von 500 bis 20 000 mPa s vorzugsweise von 1000 bis 10 000 mPa s bei 20°C (gemessen gemäß DIN 51562:1999-01). Die Säurezahlen der Polyesterpolymere sind bevorzugt kleiner oder gleich 2 mg KOH/g (gemessen gemäß DIN EN ISO 2114:2002-06).

Ein aliphatisches Polyesterpolymer ist ein Polyester gebildet aus mindestens zwei Einheiten Polycarbonsäure (vorzugsweise aliphatische Dicarbonsäure) und mindestens zwei Einheiten aliphatischem Polyol (vorzugsweise aliphatischem Diol).

Bevorzugt werden Polyester eingesetzt, die durch Umsetzung von zweiwertigen Alkoholen mit zweiwertigen Carbonsäuren, optional unter Mitverwendung von monofunktionellen Alkoholen erhalten werden. Anstelle der freien Polycarbonsäuren können auch die entsprechenden Polycarbonsäureanhydride oder entsprechende Polycarbonsäureester von niederen Alkoholen oder deren Gemische zur Herstellung der Polyester verwendet werden. Dicarbonsäurekomponenten sind z.B. Glutarsäureanhydrid, Maleinsäure, Maleinsäureanhydrid, Fumarsäure, dimere Fettsäuren. Bevorzugt sind Dicarbonsäuren der allgemeinen Formel $HOOC-(CH_2)_y-COOH$, wobei y eine Zahl von 1 bis 20, bevorzugt eine gerade Zahl von 2 bis 20 ist, z. B. Bernsteinsäure, Adipinsäure, Sebacinsäure und Dodecandicarbonsäure. Als zweiwertige Alkohole kommen z. B. Ethylenglykol, Propan-1,2- diol, Propan-1,3-diol, Butan-1,3-diol, Buten-1,4-diol, Butin-1,4-diol, Pentan-1,5-diol, Neopentylglykol, 2-Methyl-propan-1,3-diol, Methylpentandiole, ferner Diethylenglykol, Triethylenglykol, Tetraethylenglykol, Polyethylenglykol, Dipropylenglykol, Polypropylenglykol, Dibutylenglykol und Polybutylenglykole in Betracht. Bevorzugt sind Alkohole der allgemeinen Formel $HO-(CH_2)_x-OH$, wobei x eine Zahl von 1 bis 20, von 2 bis 10, oder vorzugsweise von 4 bis 8 ist, wobei x bevorzugt jeweils eine gerade Zahl ist. Beispiele hierfür sind Ethylenglycol, Butan-1,4-diol, Hexan-1,6-diol, Octan-1,8-diol und Dodecan-1,12-diol. Weiterhin bevorzugt ist Neopentylglykol. Als monofunktionelle Alkohole können lineare und verzweigte Alkohole mit 1 bis 15 C-Atomen, bevorzugt mit 2 bis 8 C-Atomen eingesetzt werden, wie Ethanol, Methanol, 2-Ethylhexanol, 2-Propylheptanol, Butanol, Hexanol, Octanol, iso-Nonanol.

Das aliphatische Polyesterpolymer ist vorzugsweise aufgebaut aus mindestens einer aliphatischen Dicarbonsäure mit 3 bis 10, vorzugsweise 4 bis 8 C-Atomen und mindestens einem Alkandiol mit 2 bis 10, vorzugsweise 4 bis 8 C-Atomen und einem Alkanmonool mit 2 bis 10, vorzugsweise 4 bis 8 C-Atomen. Besonders bevorzugt ist ein aliphatisches Polyesterpolymer aus Adipinsäure und mindestens einem Alkandiol mit 4 bis 8 C-Atomen.

Ein bevorzugter Schmelzklebstoff ist dadurch gekennzeichnet, dass das strahlungsvernetzbare Poly(meth)acrylat (a) gebildet ist aus

(i) 25 bis 60 Gew.% Methylacrylat,
(ii) 35 bis 60 Gew.% mindestens einem Alkyl(meth)acrylat mit 4 bis 18 C-Atomen in der Alkylgruppe, ausgewählt aus der Gruppe bestehend aus n-Butylacrylat, n-Hexylacrylat, 2-Ethyl-hexylacrylat, Propylheptylacrylat und deren Mischungen,
(iii) 1 bis 10 Gew.% Acrylsäure, Methacrylsäure oder deren Gemisch,
(iv) 0,5 bis 4 Gew.% mindestens einem ethylenisch ungesättigten, copolymerisierbaren Fotoinitiatormonomer, und
(v) 0 bis 25 Gew.% mindestens einem weiteren, von den Monomeren (i) bis (iv) verschiedenen Monomer, wobei

das aliphatisches Polyesterpolymer (b) in einer Menge von 2 bis 20 Gew.% eingesetzt wird und aufgebaut ist aus mindestens einer aliphatischen Dicarbonsäure mit 4 bis 8 C-Atomen und mindestens einem Alkandiol mit 4 bis 8 C-Atomen.

Der erfindungsgemäße Schmelzklebstoff weist vorzugsweise eine Nullviskosität bei 130°C kleiner als 100 Pa s auf. Er wird in lösemittelfreier, schmelzbarer Form eingesetzt. Herstellungsbedingtes Lösungsmittel kann vorher nach

geeigneten Verfahren entfernt werden, vorzugsweise auf einen Restgehalt von kleiner 0,5 Gew.%, bezogen auf den Feststoffgehalt.

In Betracht kommen insbesondere Schmelzhaftklebstoffe, die Wasser oder organische Lösemittel, z. B. aus der Lösungspolymerisation, allenfalls in geringen Mengen enthalten und aus der Schmelze aufgetragen werden. Vorzugsweise enthält der Schmelzhaftklebstoff, weniger als 5 Gew.-Teile, insbesondere weniger als 2 oder weniger als 1 Gew.-Teil Wasser und/oder organische Lösemittel auf 100 Gew.-Teile der Gewichtssumme Klebstoffpolymer. Besonders bevorzugt ist der Schmelzhaftklebstoff im Wesentlichen frei von Wasser und organischen Lösemitteln.

Der Schmelzklebstoff kann die üblichen Zusätze enthalten wie z.B. Harze, Weichmacher, Antioxidantien, Vernetzer, Füllstoffe, Farbstoffe, Verlaufshilfsmittel, Tackifier (klebrig machende Harze) usw.

Vorzugsweise enthält die Haftklebstoffzusammensetzung mindestens einen Tackifier (klebrigmachende Harze). Die Gewichtsmenge der Tackifier beträgt vorzugsweise 2 bis 30 Gew.-Teile, besonders bevorzugt 2 bis 25 Gew.-Teile oder 5 bis 20 Gew.-Teile, bezogen auf 100 Gew.— Teile Klebstoffpolymer (fest/fest). Ein Tackifier ist ein polymerer oder oligomerer Zusatzstoff für Klebstoffpolymere oder allgemein für Elastomere, der deren Autoadhäsion (Tack, Eigenklebrigkeit, Selbsthaftung) erhöht, sodass sie nach kurzem leichten Andruck fest auf Oberflächen haften. Tackifier sind z.B. Naturharze, wie Kolophoniumharze und deren durch Disproportionierung oder Isomerisierung, Polymerisation, Dimerisation, Hydrierung entstehenden Derivate oder Terpenharze. Diese können in ihrer Salzform (mit z.B. ein— oder mehrwertigen Gegenionen (Kationen) oder bevorzugt in ihrer veresterten Form vorliegen. Alkohole, die zur Veresterung verwendet werden, können ein— oder mehrwertig sein. Beispiele sind Methanol, Ethandiol, Diethylenglykol, Triethylenglykol, 1,2,3—Propanthiol, Pentaerythrit. Des Weiteren finden auch Kohlenwasserstoffharze, z.B. Cumaron—Inden—Harze, Polyterpen—Harze, Kohlenwasserstoffharze auf Basis ungesättigter CH—Verbindungen, wie Butadien, Penten, Methylbuten, Isopren, Piperylen, Divinylmethan, Pentadien, Cyclopenten, Cyclopentadien, Cyclohexadien, Styrol, alpha— Methylstyrol, Vinyltoluol Verwendung. Tackifier sind z.B. aus Adhesive Age, Juli 1987, Seite 19-23 oder Polym. Mater. Sci. Eng. 61 (1989), Seite 588-592 bekannt.

Als Tackifier werden zunehmend auch Polyacrylate, welche ein geringes Molgewicht aufweisen, verwendet. Vorzugsweise haben diese Polyacrylate ein gewichtsmittleres Molekulargewicht $M_w$ unter 50000, insbesondere unter 30 000. Die Polyacrylate bestehen bevorzugt zu mindestens 60, insbesondere mindestens 80 Gew.—% aus $C_1$—$C_8$ Alkyl(meth)acrylaten. Geeignet sind z.B. die in der WO 2013/117428 beschriebenen niedrigmolekularen Polymerisate und Oligomere mit einem gewichtsmittleren Molekulargewicht von weniger als 50000 und einer Glasübergangstemperatur von größer oder gleich -40 °C bis kleiner oder gleich 0 °C, vorzugsweise von größer oder gleich -35°C, bis kleiner oder gleich 0 °C, herstellbar durch Emulsionspolymerisation in Gegenwart mindestens eines Molekulargewichtsreglers und herstellbar aus einem Monomergemisch enthaltend mindestens 40 Gew.% mindestens eines C1- bis C20-Alkyl(meth)acrylats. Bevorzugte Tackifier sind natürliche oder chemisch modifizierte Kolophoniumharze. Kolophoniumharze bestehen zum überwiegenden Teil aus Abietinsäure oder Abietinsäurederivaten.

Zur Herstellung der Klebstoffbeschichtungen werden die Schmelzhaftklebstoffe als Schmelze auf ein Substrat aufgetragen, z.B. bei Temperaturen von 50 bis 160 °C, vorzugsweise 80 bis 150 °C oder größer 100°C. Die Auftragsmenge des Schmelzhaftklebstoffs ist vorzugsweise von 5 bis 50 $g/m^2$, besonders bevorzugt von 10 bis 30 $g/m^2$.

Als Substrat bevorzugt sind Polymerfolien, insbesondere Weichmacher enthaltende Polymerfolien. Als Träger in Betracht kommen z.B. Polyvinylchloridfolien. Die Foliendicke ist vorzugsweise 30 $\mu$m bis 150 $\mu$m. In bestimmten Anwendungen (z.B. Sonnenschutzfolien für Autoscheiben, PVC-Etiketten) werden aber auch dünnere Folien mit ab 20 $\mu$m Dicke beziehungsweise im Bereich des Oberflächenschutzes von Automobilkarosserien sehr viel größere Dicken von bis zu 350 $\mu$m angewendet. Polyvinylchloridfolien können entweder durch Kalandrieren (aus der Schmelze) oder Gießen (aus der Lösung) hergestellt werden. Neben UV-Absorbern, Stabilisatoren, Prozesshilfsmitteln und ggf. Pigmenten und Füllstoffen enthalten die Folien zwingend Weichmacher, da reines PVC ein sprödes Polymer ist. Typische Weichmachergehalte sind 25 bis 50%, in besonderen Anwendungen sind aber auch Weichmachergehalte ab 10% (steife Folien) und bis zu 70% (hochflexible Folien) möglich.

Weichmacher sind bestimmte, flüssige oder feste, indifferente organische Substanzen mit geringem Dampfdruck, überwiegend solche esterartiger Natur, welche ohne chemische Reaktion, vorzugsweise durch ihr Löse- und Quellvermögen, mit hochpolymeren Stoffen in physikalische Wechselwirkung treten und ein homogenes System mit diesen bilden können. Weichmacher verleihen den mit ihnen hergestellten Gebilden bzw. Überzügen bestimmte angestrebte physikalische Eigenschaften, wie z.B. erniedrigte Einfriertemperatur, erhöhtes Formveränderungsvermögen, erhöhte elastische Eigenschaften oder verringerte Härte. Sie gehören zu den Kunststoffadditiven. Sie werden in ein Material eingebracht, um dessen Bearbeitbarkeit, Flexibilität und Dehnungsvermögen zu verbessern wie z.B. in Weich-PVC. Bevorzugte Weichmacher sind z.B. Phthalsäureester (z.B. Dioctylphthalat, Diisononylphthalat, Diisodecylphthalat; Dibutylphthalat, Diisobutylphthalat, Dicyclohexylphthalat; Dimethylphthalat, Diethylphthalat, Mischester aus Benzylbutyl-, Butyloctyl-, Butyldecyl- und Dipentylphthalat, Bis(2-methoxyethyl)-phthalat, Dicaprylphthalat und dergleichen); Ester aus Trimellitsäure und (überwiegend) linearen $C_6$- bis $C_{11}$-Alkoholen (z.B. Tris(2-ethylhexyl)trimellitat); acyclische, aliphatische Dicarbonsäureester (z.B. Dioctyladipat, Diisodecyladipat, Dibutylsebacat, Dioctylsebacat, Decandisäurester oder Azelate); alicyclische Dicarbonsäureester (z.B. Diisononylcyclohexandicarbonsäureester), Phosphorsäureester

(z.B. Trikresylphosphat, Triphenylphosphat, Diphenylkresylphosphat, Diphenyloctylphosphat, Tris(2-ethylhexyl)-phosphat, Tris(2-butoxyethyl)phosphat; Citronensäureester, Milchsäureester, Epoxyweichmacher, Benzolsulfonamide, Methylbenzolsulfonamide und ähnliche. Besonders bevorzugte Weichmacher sind Diisononyl-cyclohexandicarboxylat, Dibutylphthalat, Diisononylphthalat und Dinonylundecylphthalat. Weitere bevorzugte Weichmacher sind sogenannte polymere Weichmacher, die durch Umsetzung von zweiwertigen Alkoholen mit zweiwertigen Carbonsäuren, optional unter Mitverwendung von monofunktionellen Alkoholen erhalten werden. Dicarbonsäurekomponenten sind z.B. Glutarsäureanhydrid, Maleinsäure, Maleinsäureanhydrid, Fumarsäure, dimere Fettsäuren. Bevorzugt sind Dicarbonsäuren der allgemeinen Formel HOOC-$(CH_2)_y$-COOH, wobei y eine Zahl von 1 bis 20, bevorzugt eine gerade Zahl von 2 bis 20 ist, z.B. Bernsteinsäure, Adipinsäure, Sebacinsäure und Dodecandicarbonsäure. Als zweiwertige Alkohole kommen z.B. Ethylenglykol, Propan-1,2-diol, Propan-1,3-diol, Butan-1,3-diol, Buten-1,4-diol, Butin-1,4-diol, Pentan-1,5-diol, Hexan-1,6-diol, Octan-1,8-diol und Dodecan-1,12-diol. Neopentylglykol, 2-Methyl-propan-1,3-diol, Methylpentandiole, ferner Diethylenglykol, Triethylenglykol, Tetraethylenglykol, Polyethylenglykol, Dipropylenglykol, Polypropylenglykol, Dibutylenglykol und Polybutylenglykole in Betracht. Als monofunktionelle Alkohole können lineare und verzweigte Alkohole mit 1-15 C-Atomen, bevorzugt 2-8 C-Atomen eingesetzt werden, wie Ethanol, Methanol, 2-Ethylhexanol, 2-Propylheptanol, Butanol, Hexanol, Octanol, iso-Nonanol.

Vorzugsweise handelt es sich bei den weichmacherhaltigen Substraten um Materialien aus Polyvinylchlorid (PVC, Weich-PVC). Der Gehalt an Weichmacher in den Substraten ist z.B. 10 bis 70 Gew.%, bevorzugt 25 bis 50 Gew.%.

In einer bevorzugten Ausführungsform handelt es ich bei dem Substrat um eine weichmacherhaltige PVC-Folie, z.B. eine Graphikfolie aus Weich-PVC, die vorzugsweise entweder durch Kalandrieren oder durch Gießen hergestellt wird. In einer weiteren bevorzugten Ausführungsform handelt es sich bei dem Substrat um eine durch Kalandrieren hergestellte weichmacherhaltige PVC-Folie für ein selbstklebendes Etikett.

Gegenstand der Erfindung ist daher auch die Verwendung eines erfindungsgemäßen Schmelzklebstoffs auf einer Graphikfolie aus Weich-PVC oder auf einem selbstklebenden Etikett aus Weich-PVC.

Gegenstand der Erfindung ist auch eine selbstklebende Graphikfolie aus Weich-PVC mit einer Klebstoffschicht, gebildet aus dem erfindungsgemäßen Schmelzklebstoff.

Gegenstand der Erfindung ist auch ein selbstklebendes Etikett aus Weich-PVC mit einer Klebstoffschicht, gebildet aus dem erfindungsgemäßen Schmelzklebstoff.

Der erfindungsgemäße strahlungsvernetzbare Schmelzklebstoff wird nach Aufbringen auf die Träger mit energiereicher Strahlung, vorzugsweise UV-Licht, insbesondere UV-C Strahlung (200-280 nm) bestrahlt, so dass eine Vernetzung erfolgt. Im Allgemeinen werden die beschichteten Substrate dazu auf ein Transportband gelegt und das Transportband an einer Strahlungsquelle, z.B. einer UV-Lampe vorbeigeführt. Der Vernetzungsgrad der Polymerisate hängt von der Dauer und Intensität der Bestrahlung ab. Vorzugsweise beträgt die Strahlungsenergie insgesamt 100 bis 1500 $mJ/cm^2$ (bezogen auf den Wellenlängenbereich von 250 bis 440 nm). Als UV-Strahler können die üblichen Strahler, beispielsweise Quecksilbermitteldrucklampen mit einer Strahlungsleistung von 80 bis 240 Watt/cm eingesetzt werden.

Die erfindungsgemäßen Schmelzklebstoffe zeichnen sich aus durch

- Gute Weichmacherresistenz
- Keine oder nur geringe Abnahme der Klebekraft (Kohäsion) nach Auftragung auf Folien aus Weich-PVC und Lagerung bei erhöhten Temperaturen.
- Keine oder nur geringe Abnahme der Haftung (Adhäsion) nach Auftragung auf Folien aus Weich-PVC und Lagerung bei erhöhten Temperaturen.
- Schälwerte (Haftung) nach Auftragung auf Folien aus Weich-PVC und Lagerung bei erhöhten Temperaturen > 10 N/25 mm.
- Scherfestigkeitswerte (Klebekraft) nach Auftragung auf Folien aus Weich-PVC und Lagerung bei erhöhten Temperaturen > 15 h.

Beispiele

Einsatzstoffe:

| | |
|---|---|
| nBA | n-Butylacrylat |
| 2-EHA | 2-Ethlyhexylacrylat |
| MA | Methylacrylat |
| AS | Acrylsäure |
| FI | Fotoinitiatormonomer: polymerisierbarer Fotoinitiator (35%ige Lösung in MEK) der Formel F-1. |

(fortgesetzt)

| | |
|---|---|
| MEK | Methylethylketon |
| t-BPPiv | tert.-Butylperpivalat (75%ige Lösung in Mineralöl) |
| Palamoll ® 632: | Polyester aus Adipinsäure und 1,2-Propandiol, polymeres Adipat dynamische Viskosität 2000 - 3500 mPa s |
| Plastomoll® DOA: | Di-i-Oktyladipat; monomeres Adipat; dynamische Viskosität 13-15 mPa s (Mischung aus Di-n-Oktyladipat und Di-Ethylhexyladipat) |
| Lutonal® M 40: | Polyvinylmethylether |
| Foral® 85-E: | Glycerylester von hydriertem Kolophoniumharz |
| acResin® A 260 UV: | MA-freies Polyacrylat, UV-vernetzbar |
| acResin® A 204 UV: | Polyacrylat, UV-vernetzbar mit MA-Gehalt größer 15 und kleiner 20 Gew.% |
| Polymer 1: | UV-vernetzbares Poly(meth)acrylat aus 44 Gew.% 2-EHA, 40 Gew.% MA, 5 Gew.% AS, 10 Gew.% MMA, 1 Gew.% FI |

Herstellung des Polymers 1 (V7)

In einer Polymerisationsapparatur bestehend aus Glasreaktor, Rückflusskühler, Rührer und Stickstoffeinlass werden in leichtem Stickstoffstrom 210 g MEK vorgelegt und auf 80 °C erwärmt. Es werden 25 g von insgesamt 920 g einer Monomerenmischung bestehend aus 2-EHA, MA, AS, MMA und FI mit der oben genannten Zusammensetzung zugegeben. Nach Wiedererreichen von 80°C werden 1,9 g einer Starterlösung aus 3,6 g tert.-Butylperpivalat und 42,3 g MEK zugegeben und 3 min anpolymerisiert. Dann werden die restlichen 895 g Monomerenmischung und 44 g Starterlösung in 3 h zugefahren. Anschließend wird die Temperatur auf 90°C erhöht und eine Lösung von 3 g tert.-Butylperpivalat in 28 g MEK in 30 min zugegeben. Danach wird Vakuum angelegt und das Lösungsmittel bei maximal 135°C und kleiner 50 mbar abdestilliert. Anschließend wird noch unter langsamen Rühren 1h bei 135°C und bestem Vakuum entgast. Die Schmelze wird in einen PP-Becher abgelassen.

K-Wert (1% in THF): 42
Nullviskosität bei 130°C: 51 Pa s

Herstellung der Mischungen:

V2: 50g acResin® A 260 UV werden auf 80°C erhitzt und unter Rühren 3,5g Palamoll® 632 zugegeben, anschließend wird die Mischung abgekühlt.

K-Wert acResin® A 260 UV (1 % in THF): 48-52
Nullviskosität acResin A 260 UV bei 130°C: 30-70 Pa s

V4: 50g acResin® A 204 UV werden auf 80°C erhitzt und unter Rühren 2g Palamoll® 632 zugegeben, anschließend wird die Mischung abgekühlt.

K-Wert (1% in THF): 49
Nullviskosität bei 130°C: 37 Pa s

V5: 50g acResin® A 204 UV werden auf 80°C erhitzt und unter Rühren 10g Lutonal® M40 zugegeben, anschließend wird die Mischung abgekühlt.

K-Wert acResin® A 204 UV (1 % in THF): 48-52
Nullviskosität acResin® A 204 UV bei 130°C: 20-55 Pa s

V6: Das Polymer wird wie für Polymer 1 (V7) beschrieben synthetisiert, jedoch wird vor Anlegen des Vakuums die Lösung in MEK abgekühlt, und 64,5 g Palamoll® 632 zugegeben. Anschließend wird wie für Polymer 1 beschrieben aufgearbeitet.

K-Wert (1% in THF): 42

Nullviskosität bei 130°C: 40 Pa s

B1: Das Polymer wird wie in V6 beschrieben synthetisiert und aufgearbeitet. Im Unterschied zu V6 wird der beschichtete Film durch UV-Härtung vernetzt.

B2: Das Polymer wird wie für Polymer 1 beschrieben synthetisiert, jedoch wird vor Anlegen des Vakuums die Lösung in MEK abgekühlt, und 64,5 g Palamoll® 632 und 69 g Foral® 85-E zugegeben. Anschließend wird wie für Polymer 1 beschrieben aufgearbeitet.

K-Wert (1% in THF): 42
Nullviskosität bei 130°C: 45 Pa s

V8: 50g von Polymer 1 (V7) werden auf 80°C erhitzt und unter Rühren 3,5g Plastomoll® DOA zugegeben, anschließend wird die Mischung abgekühlt.

K-Wert (1% in THF): 40
Nullviskosität bei 130°C: 24 Pa s

Messung der Nullviskosität:

Die Nullviskosität ist der Grenzwert der Viskositätsfunktion bei unendlich niedrigen Scherraten. Sie wird gemessen mit einem Anton Paar Rheometer MCR 100 (US 200 Auswertesoftware) in Platte/Platte Geometrie. Die Proben werden in oszillatorischer Scherung bei kleiner Scheramplitude von 10% vermessen. Temperatur 130°C (oder wie angegeben), Kreisfrequenzrampe log 100-0,1 1/s, Messspalt 0,5 mm, Auswertung nach Carreau-Gahleitner I, Stempeldurchmesser 25 mm.

Anwendungstechnische Prüfungen:

Die Messungen erfolgen bei Raumtemperatur (20°C), soweit nicht explizit etwas anderes angegeben ist.

Die Haftklebstoffe wurden auf 120°C erhitzt und aus der Schmelze mit einer Auftragsmenge von 25 g/m$^2$ bzw. 15 g/m$^2$ (nur V7) auf silikonisierte PET-Folie aufgerakelt und mit UVC-Licht bzw. unbestrahlt (V6) bestrahlt. Der Film wird dann auf eine handelsübliche, 100 µm Weich-PVC-Folie (SK-S-P Transparent der Fa. Renolit®) als Träger übertragen. Der mit Haftklebstoff beschichtete Träger wurde in 25 mm breite Prüfstreifen geschnitten. Die Prüfungen wurden entweder sofort fortgeführt oder die Prüfstreifen wurden vor Prüfung zur Bestimmung der Weichmacherresistenz noch 3 Tage bei 70°C und 50% rel. Luftfeuchtigkeit gelagert.

a) Schälfestigkeit (peel)

Zur Bestimmung der Schälfestigkeit wurden die 25 mm breiten Prüfstreifen auf die Prüffläche aus Stahl (AFERA-Stahl) geklebt und mit einer 1 kg schweren Rolle einmal angerollt. Der Prüfstreifen wurde dann mit einem Ende in die oberen Backen einer Zug-Dehnungs-Prüfapparatur eingespannt. Der Klebestreifen wurde mit 300 mm/min unter einem 180° Winkel von der Prüffläche abgezogen, d.h. der Klebestreifen wurde umgebogen und parallel zum Prüfblech abgezogen und der dazu benötigte Kraftaufwand gemessen. Das Maß für die Schälfestigkeit ist die Kraft in N/25 mm, die sich als Durchschnittswert aus fünf Messungen ergibt. Die Schälfestigkeit wurde 24 Stunden nach der Verklebung bestimmt. Nach dieser Zeit hat sich die Klebekraft voll ausgebildet.

b) Scherfestigkeit (shear)

Zur Bestimmung der Scherfestigkeit wurden die Prüfstreifen mit einer verklebten Fläche von 25 x 25 mm auf Stahlblech (AFERA-Stahl) geklebt, mit einer 1 kg schweren Rolle einmal angerollt und anschließend hängend mit einem 1 kg Gewicht belastet. Die Scherfestigkeit (Kohäsion) wurde bei Normklima (23°C; 50% rel. Luftfeuchtigkeit) bestimmt. Das Maß für die Scherfestigkeit ist die Zeit in Stunden bis zum Abfallen des Gewichts. Es wurde jeweils der Durchschnitt aus fünf Messungen gebildet.

Tabelle 1: UV-härtbare Schmelzklebstoffe

| Beispiel | UV-vernetzbares Poly(meth)acrylat | Additiv |
|---|---|---|
| V1 | acResin® A 260 UV | - |

(fortgesetzt)

| Beispiel | UV-vernetzbares Poly(meth)acrylat | Additiv |
|---|---|---|
| V2 | acResin® A 260 UV | 7 Gew.% Palamoll 632 |
| V3 | acResin® A 204 UV | - |
| V4 | acResin® A 204 UV | 4 Gew.% Palamoll 632 |
| V5 | acResin® A 204 UV | 20 Gew.% Lutonal M 40 |
| V6 | Polymer 1 | 7 Gew.% Palamoll 632 |
| V7 | Polymer 1 | - |
| B1 | Polymer 1 | 7 Gew.% Palamoll 632 |
| B2 | Polymer 1 | 7 Gew.% Palamoll 632 7,5 Gew.% Foral 85E |
| V8 | Polymer 1 | 7 Gew.% Plastomoll DOA |

Tabelle 2: Testergebnisse

| | | 24h peel Stahl [N/25mm] | | shear 1h Stahl; 25x25mm, 1kg [h] | |
|---|---|---|---|---|---|
| Beispiel | Bestrahlung, UVC-Dosis | vor Lagerung | nach 3d/70°C | vor Lagerung | nach 3d/70°C |
| V1 | 20 $mJ/cm^2$ | 16 | 10 | 28 | 5 |
| V2 | 20 $mJ/cm^2$ | 14 | 10 | 13 | 4 |
| V3 | 20 $mJ/cm^2$ | 12 | 6 | >50 | 11 |
| V4 | 20 $mJ/cm^2$ | 12 | 6 | 35 | 10 |
| V5 | 10 $mJ/cm^2$ | 24 | 9 | 38 | 4 |
| V6 | - | 27 | 24 | 1 | 0,2 |
| V7 | 10 $mJ/cm^2$, (15 $g/m^2$) | 23 | 13 | >50 | 23 |
| B1 | 20 $mJ/cm^2$ | 20 | 18 | >50 | >50 |
| B2 | 20 $mJ/cm^2$ | 25 | 18 | >50 | 38 |
| V8 | 20 $mJ/cm^2$ | 15 | 9 | >50 | 31 |
| V1 bis V8: Vergleichsversuche; B1 bis B2: erfindungsgemäß | | | | | |

Bevorzugt sind folgende Klebewerte:

| | |
|---|---|
| 24h peel nach 3d/70°C | weniger als 50% Abfall und > 10 N/25 mm |
| 1h shear nach 3d/70°C | weniger als 50% Abfall und > 15 h |

Die Ergebnisse zeigen:

| | |
|---|---|
| V1 | Kohäsionswert zu niedrig, Kohäsionsabfall (shear) > 50% |
| V2 | Kohäsionswert zu niedrig, Kohäsionsabfall (shear) > 50% |
| V3 | Schälwertabfall (peel) auf zu niedrigen Wert, Kohäsionsabfall (shear) > 50% |
| V4 | Schälwertabfall (peel) auf zu niedrigen Wert, Kohäsionsabfall (shear) > 50% |
| V5 | Schälwertabfall (peel) und Kohäsionsabfall (shear) > 50% |
| V6 | keine Kohäsion |
| V7 | Kohäsionsabfall (shear) > 50% |

(fortgesetzt)

| | |
|---|---|
| B1 | Erfindungsgemäß |
| B2 | Erfindungsgemäß |
| V8 | Schälwerte (peel) zu niedrig |

Die Ergebnisse zeigen, dass ein MA-freies Polymer (V1 und V2) sowohl mit als auch ohne Beimischung von Weichmacher eine zu geringe Weichmacherresistenz aufweist, was sich in einem mehr als 50%igen Abfall der Kohäsionswerte zeigt. Ein Polymer mit einem MA-Gehalt kleiner 20% (V3) zeigt zu niedrige Schälwerte nach Lagerung. Der Zusatz von Weichmacher (V4) erhöht die Schälwerte nicht in der gewünschten Weise. Darüberhinaus zeigen beide Proben einen zu starken Abfall der Kohäsion nach Lagerung (zu geringe Weichmacherresistenz). Der Zusatz von Polyvinylethern (V5) verbessert ebenfalls nicht die Weichmacherresistenz. Eine erfindungsgemäße Zusammensetzung, jedoch ohne Vernetzung mittels UV-Härtung (V6) führt schon vor Lagerung zu sehr geringen Kohäsionswerten. Wird jedoch vernetzt, lässt sich sowohl mit zusätzlichem Tackifier (B2) als auch ohne zusätzlichem Tackifier (B1) ein Haftklebstoffsystem erzielen, dass die geforderten Anforderungen an Klebewerte und Weichmacherresistenz erreicht. Das reine, weichmacherfreie Polymer (V7) erfüllt die Anforderungen an Weichmacherresistenz bezüglich der Scherwerte nach Lagerung knapp nicht. Ersetzt man den polymeren Weichmacher durch einen monomeren Weichmacher (V8) führt dies zu zu geringen Schälwerten.

## Patentansprüche

**1.** UV-härtbarer Schmelzklebstoff, enthaltend

(a) mindestens ein UV-vernetzbares Poly(meth)acrylat, welches gebildet ist aus

(i) mindestens 20 Gew.% Methylacrylat,
(ii) mindestens einem Alkyl(meth)acrylat mit 4 bis 18 C-Atomen in der Alkylgruppe,
(iii) mindestens einem ethylenisch ungesättigten Monomer, welches mindestens eine Säuregruppe aufweist,
(iv) mindestens einem ethylenisch ungesättigten, copolymerisierbaren Fotoinitiatormonomer, und
(v) optional mindestens einem weiteren, von den Monomeren (i) bis (iv) verschiedenen Monomer, und

(b) mindestens ein aliphatisches Polyesterpolymer, welches bei 20°C eine dynamische Viskosität gemessen gemäß DIN 51562:1999-01 von 500 bis 20 000 mPa s aufweist.

**2.** Schmelzklebstoff nach dem vorhergehenden Anspruch, **dadurch gekennzeichnet, dass** das UV-vernetzbare Poly(meth)acrylat vor Vernetzung eine Glasübergangstemperatur von kleiner oder gleich 10 °C, vorzugsweise von -60 bis +10 °C aufweist, wobei die Glasübergangstemperatur bestimmt wird durch Differential Scanning Calorimetrie als sogenannte midpoint temperature bei Auswertung der zweiten Heizkurve und einer Heizrate von 20° C/min.

**3.** Schmelzklebstoff nach einem der vorhergehenden Ansprüche, **dadurch gekennzeichnet, dass** das UV-vernetzbare Poly(meth)acrylat vor Vernetzung einen K-Wert von mindestens 20, vorzugsweise von 30 bis 80 aufweist, gemessen in Tetrahydrofuran als 1%ige Lösung bei 21 °C.

**4.** Schmelzklebstoff nach einem der vorhergehenden Ansprüche, **dadurch gekennzeichnet, dass** das aliphatische Polyesterpolymer in einer Menge von 1 bis 20 Gew.%, bezogen auf das UV-vernetzbare Poly(meth)acrylat, eingesetzt wird.

**5.** Schmelzklebstoff nach einem der vorhergehenden Ansprüche, **dadurch gekennzeichnet, dass** das aliphatische Polyesterpolymer aufgebaut ist aus mindestens einer aliphatischen Dicarbonsäure mit 3 bis 10, vorzugsweise 4 bis 8 C-Atomen und mindestens einem Alkandiol mit 2 bis 10, vorzugsweise 4 bis 8 C-Atomen.

**6.** Schmelzklebstoff nach dem vorhergehenden Anspruch, **dadurch gekennzeichnet, dass** das aliphatische Polyesterpolymer aufgebaut ist aus Adipinsäure und mindestens einem Alkandiol mit 4 bis 8 C-Atomen.

**7.** Schmelzklebstoff nach einem der vorhergehenden Ansprüche, **dadurch gekennzeichnet, dass** das strahlungsvernetzbare Poly(meth)acrylat zu 25 bis 60 Gew.% aus Methylacrylat, gebildet ist.

**8.** Schmelzklebstoff nach einem der vorhergehenden Ansprüche, **dadurch gekennzeichnet, dass** das strahlungsvernetzbare Poly(meth)acrylat zu mindestens 30 Gew.% aus C4- bis C10-Alkyl(meth)acrylaten (ii), vorzugsweise ausgewählt aus n-Butylacrylat und 2-Ethyl-hexylacrylat, gebildet ist.

**9.** Schmelzklebstoff nach einem der vorhergehenden Ansprüche, **dadurch gekennzeichnet, dass** das strahlungsvernetzbare Poly(meth)acrylat zu 0,1 bis 30 Gew.% aus dem ethylenisch ungesättigten Monomer (iii), welches mindestens eine Säuregruppe aufweist, gebildet ist, vorzugsweise zu 1 bis 15 Gew.% aus Acrylsäure, Methacrylsäure oder deren Gemisch.

**10.** Schmelzklebstoff nach einem der vorhergehenden Ansprüche, **dadurch gekennzeichnet, dass** das Fotoinitiatormonomer (iv) in einer Menge von größer oder gleich 0,1 Gew.%, vorzugsweise größer oder gleich 0,2 Gew.% und bis zu 5 Gew.% in das strahlungsvernetzbare Poly(meth)acrylat copolymerisiert ist.

**11.** Schmelzklebstoff nach einem der vorhergehenden Ansprüche, **dadurch gekennzeichnet, dass** das strahlungsvernetzbare Poly(meth)acrylat zu 0 bis 25 Gew.% aus mindestens einem weiteren, von den Monomeren (i) bis (iv) verschiedenen Monomer (v) gebildet ist.

**12.** Schmelzklebstoff nach einem der vorhergehenden Ansprüche, **dadurch gekennzeichnet, dass** die weiteren Monomer (v) keine N-haltigen Monomere und keine aromatischen Monomere umfassen.

**13.** Schmelzklebstoff nach einem der vorhergehenden Ansprüche, **dadurch gekennzeichnet, dass** das strahlungsvernetzbare Poly(meth)acrylat (a) gebildet ist aus

(i) 25 bis 60 Gew.% Methylacrylat,
(ii) 35 bis 60 Gew.% mindestens einem Alkyl(meth)acrylat mit 4 bis 18 C-Atomen in der Alkylgruppe, ausgewählt aus der Gruppe bestehend aus n-Butylacrylat, n-Hexylacrylat, 2-Ethyl-hexylacrylat, Propylheptylacrylat und deren Mischungen,
(iii) 1 bis 10 Gew.% Acrylsäure, Methacrylsäure oder deren Gemisch,
(iv) 0,2 bis 5 Gew.% mindestens einem ethylenisch ungesättigten, copolymerisierbaren Fotoinitiatormonomer, und
(v) 0 bis 25 Gew.% mindestens einem weiteren, von den Monomeren (i) bis (iv) verschiedenen Monomer, wobei

das aliphatische Polyesterpolymer (b) in einer Menge von 1 bis 20 Gew.% eingesetzt wird und aufgebaut ist aus mindestens einer aliphatischen Dicarbonsäure mit 4 bis 8 C-Atomen und mindestens einem Alkandiol mit 4 bis 8 C-Atomen.

**14.** Schmelzklebstoff nach einem der vorhergehenden Ansprüche, **dadurch gekennzeichnet, dass** mindestens ein Tackifier enthalten ist, vorzugsweise in einer Menge von 2 bis 25 Gewichtsteilen, bezogen auf 100 Gewichtsteile des UV-vernetzbaren Poly(meth)acrylats.

**15.** Verwendung eines Schmelzklebstoffs nach einem der vorhergehenden Ansprüche auf einer Graphikfolie aus Weich-PVC oder auf einem Etikett aus Weich-PVC.

**16.** Verwendung nach dem vorhergehenden Anspruch, **dadurch gekennzeichnet, dass** das Weich-PVC PVC-kompatible Weichmacher in einer Menge von 10 bis 70 Gew.% enthält und die Weichmacher ausgewählt sind aus Phthalsäureestern, Estern aus Trimellitsäuree und linearen oder überwiegend linearen $C_6$- bis $C_{11}$-Alkoholen; acyclischen aliphatischen Dicarbonsäureestern, alicyclischen Dicarbonsäureestern, Phosphorsäureestern, Citronensäureestern, Milchsäureestern, Epoxyweichmachern, Benzolsulfonamiden, Methylbenzolsulfonamiden; polymeren Weichmachern, die durch Umsetzung von zweiwertigen Alkoholen mit zweiwertigen Carbonsäuren, optional unter Mitverwendung von monofunktionellen Alkoholen erhalten werden.

**17.** Selbstklebende Graphikfolie aus Weich-PVC oder selbstklebendes Etikett aus Weich-PVC, jeweils mit einer Klebstoffschicht, gebildet aus dem Schmelzklebstoff nach einem der Ansprüche 1 bis 14.

**18.** Graphikfolie oder Etikett nach dem vorhergehenden Anspruch, **dadurch gekennzeichnet, dass** die Auftragsmenge

des Schmelzklebstoffs 5 bis 50 g/m$^2$ beträgt.

## Claims

1. A UV-curable hotmelt adhesive comprising

   (a) at least one UV-crosslinkable poly(meth)acrylate formed from

   (i) at least 20% by weight of methyl acrylate,
   (ii) at least one alkyl (meth)acrylate having 4 to 18 carbon atoms in the alkyl group,
   (iii) at least one ethylenically unsaturated monomer comprising at least one acid group,
   (iv) at least one ethylenically unsaturated copolymerizable photoinitiator monomer and
   (v) optionally at least one further monomer distinct from the monomers (i) to (iv) and

   (b) at least one aliphatic polyester polymer which at 20°C has a dynamic viscosity according to DIN 51562:1999-01 of 500 to 20 000 mPa s.

2. The hotmelt adhesive according to the preceding claim, wherein before crosslinking the UV-crosslinkable poly(meth)acrylate has a glass transition temperature of not more than 10°C, preferably of -60°C to +10°C, wherein the glass transition temperature is determined by differential scanning calorimetry as the so-called midpoint temperature upon evaluation of the second heating curve and at a heating rate of 20°C/min.

3. The hotmelt adhesive according to either of the preceding claims, wherein before crosslinking the UV-crosslinkable poly(meth)acrylate has a K value of at least 20, preferably of 30 to 80, measured in tetrahydrofuran as a 1% solution at 21°C.

4. The hotmelt adhesive according to any of the preceding claims, wherein the aliphatic polyester polymer is employed in an amount of 1% to 20% by weight based on the UV-crosslinkable poly(meth)acrylate.

5. The hotmelt adhesive according to any of the preceding claims, wherein the aliphatic polyester polymer is constructed from at least one aliphatic dicarboxylic acid having 3 to 10, preferably 4 to 8, carbon atoms and at least one alkanediol having 2 to 10, preferably 4 to 8, carbon atoms.

6. The hotmelt adhesive according to the preceding claim, wherein the aliphatic polyester polymer is constructed from adipic acid and at least one alkanediol having 4 to 8 carbon atoms.

7. The hotmelt adhesive according to any of the preceding claims, wherein the radiation-crosslinkable poly(meth)acrylate is formed to an extent of 25% to 60% by weight from methyl acrylate.

8. The hotmelt adhesive according to any of the preceding claims, wherein the radiation-crosslinkable poly(meth)acrylate is formed to an extent of at least 30% by weight from C4- to C10-alkyl (meth) acrylates (ii), preferably selected from n-butyl acrylate and 2-ethylhexyl acrylate.

9. The hotmelt adhesive according to any of the preceding claims, wherein the radiation-crosslinkable poly(meth)acrylate is formed to an extent of 0.1% to 30% by weight from the ethylenically unsaturated monomer (iii) comprising at least one acid group, preferably to an extent of 1% to 15% by weight from acrylic acid, methacrylic acid or a mixture thereof.

10. The hotmelt adhesive according to any of the preceding claims, wherein the photoinitiator monomer (iv) is copolymerized into the radiation-crosslinkable poly(meth)acrylate in an amount of not less than 0.1% by weight, preferably not less than 0.2% by weight and up to 5% by weight.

11. The hotmelt adhesive according to any of the preceding claims, wherein the radiation-crosslinkable poly (meth) acrylate is formed to an extent of 0% to 25% by weight from at least one further monomer (v) distinct from the monomers (i) to (iv).

12. The hotmelt adhesive according to any of the preceding claims, wherein the further monomers (v) comprise no

N—containing monomers and no aromatic monomers.

**13.** The hotmelt adhesive according to any of the preceding claims, wherein the radiation-crosslinkable poly(meth)acrylate (a) is formed from

(i) 25% to 60% by weight of methyl acrylate,
(ii) 35% to 60% by weight of at least one alkyl (meth)acrylate having 4 to 18 carbon atoms in the alkyl group and selected from the group consisting of n-butyl acrylate, n-hexyl acrylate, 2-ethylhexyl acrylate, propylheptyl acrylate and mixtures thereof,
(iii) 1% to 10% by weight of acrylic acid, methacrylic acid or a mixture thereof,
(iv) 0.2% to 5% by weight of at least one ethylenically unsaturated copolymerizable photoinitiator monomer and
(v) 0% to 25% of at least one further monomer distinct from the monomers (i) to (iv), and

the aliphatic polyester polymer (b) is used in an amount of 1% to 20% by weight and is constructed from at least one aliphatic dicarboxylic acid having 4 to 8 carbon atoms and at least one alkanediol having 4 to 8 carbon atoms.

**14.** The hotmelt adhesive according to any of the preceding claims, wherein at least one tackifier is present, preferably in an amount of 2 to 25 parts by weight based on 100 parts by weight of the UV-crosslinkable poly(meth)acrylate.

**15.** The use of a hotmelt adhesive according to any of the preceding claims on a graphics film made of plasticized PVC or on a label made of plasticized PVC.

**16.** The use according to the preceding claim, wherein the plasticized PVC comprises PVC-compatible plasticizers in an amount of 10% to 70% by weight and the plasticizers are selected from phthalate esters, esters of trimellitic acid and linear or predominantly linear $C_6$- to $C_{11}$-alcohols; acyclic and aliphatic dicarboxylate esters, alicyclic dicarboxylate esters, phosphate esters, citrate esters, lactate esters, epoxy plasticizers, benzenesulfonamides, methylbenzenesulfonamides; polymeric plasticizers obtainable by reaction of dihydric alcohols with dibasic carboxylic acids, optionally with co-use of monofunctional alcohols.

**17.** A self—adhesive graphics film made of plasticized PVC or self—adhesive label made of plasticized PVC, each having an adhesive layer formed from the hotmelt adhesive according to any of claims 1 to 14.

**18.** The graphics film or label according to the preceding claim, wherein the application rate of the hotmelt adhesive is 5 to 50 g/$m^2$.

## Revendications

**1.** Adhésif thermofusible durcissable aux UV, contenant

(a) au moins un poly(méth)acrylate réticulable aux UV, qui est constitué par

(i) au moins 20% en poids d'acrylate de méthyle,
(ii) au moins un (méth)acrylate d'alkyle comprenant 4 à 18 atomes de carbone dans le groupe alkyle,
(iii) au moins un monomère éthyléniquement insaturé, qui présente au moins un groupe acide,
(iv) au moins un monomère photo-initiateur, éthyléniquement insaturé, copolymérisable et
(v) éventuellement au moins un autre monomère différent des monomères (i) à (iv) et

(b) au moins un polymère de polyester aliphatique qui présente à 20°C une viscosité dynamique, mesurée selon la norme DIN 51562:1999-01, de 500 à 20.000 mPa.s.

**2.** Adhésif thermofusible selon la revendication précédente, **caractérisé en ce que** le poly(méth)acrylate réticulable aux UV présente, avant la réticulation, une température de transition vitreuse inférieure ou égale à 10°C, de préférence de -60 à +10°C, la température de transition vitreuse étant déterminée par calorimétrie différentielle à balayage en tant que température de point central (midpoint) lors de l'évaluation de la deuxième courbe de chauffage et à une vitesse de chauffage de 20°C/min.

**3.** Adhésif thermofusible selon l'une quelconque des revendications précédentes, **caractérisé en ce que** le poly(méth)acrylate réticulable aux UV présente, avant la réticulation, une valeur K d'au moins 20, de préférence de 30 à 80, mesurée dans du tétrahydrofuranne sous forme de solution à 1% à 21°C.

**4.** Adhésif thermofusible selon l'une quelconque des revendications précédentes, **caractérisé en ce que** le polymère de polyester aliphatique est utilisé en une quantité de 1 à 20% en poids, par rapport au poly(méth)acrylate réticulable aux UV.

**5.** Adhésif thermofusible selon l'une quelconque des revendications précédentes, **caractérisé en ce que** le polymère de polyester aliphatique est constitué d'au moins un acide dicarboxylique aliphatique comprenant 3 à 10, de préférence 4 à 8 atomes de carbone et d'au moins un alcanediol comprenant 2 à 10, de préférence 4 à 8 atomes de carbone.

**6.** Adhésif thermofusible selon la revendication précédente, **caractérisé en ce que** le polymère de polyester aliphatique est constitué d'acide adipique et d'au moins un alcanediol comprenant 4 à 8 atomes de carbone.

**7.** Adhésif thermofusible selon l'une quelconque des revendications précédentes, **caractérisé en ce que** le poly(méth)acrylate réticulable par un rayonnement est constitué par 25 à 60% en poids d'acrylate de méthyle.

**8.** Adhésif thermofusible selon l'une quelconque des revendications précédentes, **caractérisé en ce que** le poly(méth)acrylate réticulable par un rayonnement est constitué par au moins 30% en poids de (méth)acrylates de C4-C10-alkyle (ii), de préférence choisis parmi l'acrylate de n-butyle et l'acrylate de 2-éthylhexyle.

**9.** Adhésif thermofusible selon l'une quelconque des revendications précédentes, **caractérisé en ce que** le poly(méth)acrylate réticulable par un rayonnement est constitué par 0,1 à 30% en poids du monomère éthyléniquement insaturé (iii), qui présente au moins un groupe acide, de préférence par 1 à 15% en poids d'acide acrylique, d'acide méthacrylique ou de leur mélange.

**10.** Adhésif thermofusible selon l'une quelconque des revendications précédentes, **caractérisé en ce que** le monomère photo-initiateur (iv) est copolymérisé en une quantité supérieure ou égale à 0,1% en poids, de préférence supérieure ou égale à 0,2% en poids et de jusqu'à 5% en poids dans le poly(méth)acrylate réticulable par un rayonnement.

**11.** Adhésif thermofusible selon l'une quelconque des revendications précédentes, **caractérisé en ce que** le poly(méth)acrylate réticulable par un rayonnement est constitué par 0 à 25% en poids d'au moins un autre monomère (v) différent des monomères (i) à (iv).

**12.** Adhésif thermofusible selon l'une quelconque des revendications précédentes, **caractérisé en ce que** les autres monomères (v) ne comprennent pas de monomères contenant N ni de monomères aromatiques.

**13.** Adhésif thermofusible selon l'une quelconque des revendications précédentes, **caractérisé en ce que** le poly(méth)acrylate réticulable par un rayonnement (a) est constitué par

(i) 25 à 60% en poids d'acrylate de méthyle,
(ii) 35 à 60% en poids d'au moins un (méth)acrylate d'alkyle comprenant 4 à 18 atomes de carbone dans le groupe alkyle, choisi dans le groupe constitué par l'acrylate de n-butyle, l'acrylate de n-hexyle, l'acrylate de 2-éthylhexyle, l'acrylate de propylheptyle et leurs mélanges,
(iii) 1 à 10% en poids d'acide acrylique, d'acide méthacrylique ou de leurs mélanges et
(iv) 0,2 à 5% en poids d'au moins un monomère photo-initiateur, éthyléniquement insaturé, copolymérisable et
(v) 0 à 25% en poids d'au moins un autre monomère différent des monomères (i) à (iv) et

le polymère de polyester aliphatique (b) est utilisé en une quantité de 1 à 20% et est constitué d'au moins un acide dicarboxylique aliphatique comprenant 4 à 8 atomes de carbone et d'au moins un alcanediol comprenant 4 à 8 atomes de carbone.

**14.** Adhésif thermofusible selon l'une quelconque des revendications précédentes, **caractérisé en ce qu'**il contient au moins un agent poisseux, de préférence en une quantité de 2 à 25 parties en poids, par rapport à 100 parties du poly(méth)acrylate réticulable aux UV.

**15.** Utilisation d'un adhésif thermofusible selon l'une quelconque des revendications précédentes sur une feuille graphique en PVC souple ou sur une étiquette en PVC souple.

**16.** Utilisation selon la revendication précédente, **caractérisée en ce que** le PVC souple contient des plastifiants compatibles avec le PVC en une quantité de 10 à 70% en poids et les plastifiants sont choisis parmi les esters de l'acide phtalique, les esters de l'acide trimellitique et de $C_6$-$C_{11}$-alcools linéaires ou principalement linéaires ; les esters d'acides dicarboxyliques aliphatiques acycliques, les esters d'acides dicarboxyliques alicycliques, les esters de l'acide phosphorique, les esters de l'acide citrique, les esters de l'acide lactique, les plastifiants époxy, les benzènesulfonamides, les méthylbenzènesulfonamides ; les plastifiants polymères qui sont obtenus par transformation d'alcools bivalents avec des acides carboxyliques bivalents, éventuellement avec utilisation conjointe d'alcools monofonctionnels.

**17.** Feuille graphique autoadhésive en PVC souple ou étiquette autoadhésive en PVC souple, présentant à chaque fois une couche adhésive constituée par l'adhésif thermofusible selon l'une quelconque des revendications 1 à 14.

**18.** Feuille graphique ou étiquette selon la revendication précédente, **caractérisée en ce que** la quantité appliquée de l'adhésif thermofusible est de 5 à 50 $g/m^2$.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 02086002 A
- WO 9731077 A
- WO 9731076 A
- WO 2007079080 A
- US 5800919 A
- US 2016369133 A1
- EP 377191 A
- EP 1213306 A
- WO 2013117428 A


### In der Beschreibung aufgeführte Nicht-Patentliteratur


- **T.G. FOX.** *Bull. Am. Phys. Soc.,* 1956, vol. 1, 123
- Ullmann's Encyclopädie der technischen Chemie. Verlag Chemie, 1980, vol. 19, 18
- Ullmann's Ecyclopedia of Industrial Chemistry. VCH Weinheim, 1992, vol. 5,A21, 169
- **J. BRANDRUP ; E.H. IMMERGUT.** Polymer Handbook. J. Wiley, 1966
- **J. BRANDRUP, E.H. IMMERGUT.** Polymer Handbook. J. Wiley, 1975
- **J. BRANDRUP, E.H. IMMERGUT.** Polymer Handbook. J. Wiley, 1989
- *Adhesive Age,* Juli 1987, 19-23
- *Polym. Mater. Sci. Eng.,* 1989, vol. 61, 588-592